(19) Europäisches Patentamt

European Patent Office

Office européen des brevets

(11) EP 1 482 606 B1

(12) FASCICULE DE BREVET EUROPEEN

(45) Date de publication et mention
de la délivrance du brevet:
**02.08.2006 Bulletin 2006/31**

(51) Int Cl.:
**H01S 3/067** (2006.01) **G02B 6/036** (2006.01)

(21) Numéro de dépôt: **04291305.3**

(22) Date de dépôt: **21.05.2004**

(54) **Fibre optique pour amplification ou pour émission laser**

Optische Faser für Verstärkung oder Laserstrahlung

Optical fibre for amplification or laser emission

(84) Etats contractants désignés:
**AT BE BG CH CY CZ DE DK EE ES FI FR GB GR HU IE IT LI LU MC NL PL PT RO SE SI SK TR**

(30) Priorité: **27.05.2003 FR 0306386**

(43) Date de publication de la demande:
**01.12.2004 Bulletin 2004/49**

(73) Titulaire: **Draka Comteq B.V.**
**1018 TX Amsterdam (NL)**

(72) Inventeurs:
• **Provost, Lionel**
  **91460 Marcoussis (FR)**
• **Melin, Gilles**
  **91400 Orsay (FR)**
• **Le Sauze, André**
  **91440 Bures sur Yvette (FR)**
• **Fleureau, Anne**
  **77880 Grez Sur Loing (FR)**
• **Simonneau, Christian**
  **92160 Antony (FR)**
• **Rejeaunier, Xavier**
  **06210 Mandelieu la Napoule (FR)**

(74) Mandataire: **Blokland, Arie**
**Algemeen Octrooi- en Merkenbureau,**
**P.O. Box 645**
**5600 AP Eindhoven (NL)**

(56) Documents cités:
EP-B- 0 905 834          WO-A-03/019257
US-A- 4 465 334          US-B1- 6 480 659

• SAHU J K ET AL: "Jacketed air-clad cladding pumped ytterbium-doped fibre laser with wide tuning range" ELECTRONICS LETTERS, IEE STEVENAGE, GB, vol. 37, no. 18, 30 août 2001 (2001-08-30), pages 1116-1117, XP006017185 ISSN: 0013-5194
• EGGLETON B J ET AL: "CLADDING-MODE-RESONANCES IN AIR-SILICA MICROSTRUCTURE OPTICAL FIBERS" JOURNAL OF LIGHTWAVE TECHNOLOGY, IEEE. NEW YORK, US, vol. 18, no. 8, août 2000 (2000-08), pages 1084-1100, XP000989386 ISSN: 0733-8724

EP 1 482 606 B1

## Description

L'invention concerne le domaine des fibres optiques pour amplification ou pour émission laser, c'est-à-dire des fibres optiques amplificatrices ou émettrices laser.

Une fibre optique amplificatrice transforme de l'énergie lumineuse à une longueur d'onde de pompage en de l'énergie lumineuse sur une plage de longueur d'onde signal relativement large, par exemple typiquement quelques dizaines de nanomètres. Dans la suite, on parlera parfois plus simplement d'onde signal. L'onde de pompage comme l'onde signal se propagent longitudinalement dans la fibre optique amplificatrice. Une partie de la fibre optique amplificatrice est dopée avec une terre rare. Cette terre rare contient par exemple de l'Erbium auquel s'ajoute avantageusement par exemple de l'Aluminium. C'est l'interaction entre cette zone dopée d'une part et l'énergie lumineuse à la longueur d'onde de pompage d'autre part qui permet l'amplification du signal sur une plage de longueur d'onde signal. C'est cette interaction qu'il s'agit de favoriser pour améliorer l'efficacité de la fibre optique amplificatrice.

Une fibre optique émettrice transforme de l'énergie lumineuse à une longueur d'onde de pompage en de l'énergie lumineuse sur une plage de longueur d'onde signal relativement étroite, par exemple typiquement quelques nanomètres. Dans la suite, on parlera parfois plus simplement d'onde signal. L'onde de pompage comme l'onde signal se propagent longitudinalement dans la fibre optique émettrice. Une partie de la fibre optique émettrice est dopée avec une terre rare. Cette terre rare contient par exemple de l'Ytterbium. C'est l'interaction entre cette zone dopée d'une part et l'énergie lumineuse à la longueur d'onde de pompage d'autre part qui permet la création du signal sur une plage de longueur d'onde signal à partir de l'énergie lumineuse à la longueur d'onde de pompage. C'est cette interaction qu'il s'agit de favoriser pour améliorer l'efficacité de la fibre optique émettrice. Dans la suite du texte, sauf mention contraire, on parlera de fibre optique amplificatrice, mais ce qui sera dit de la fibre optique amplificatrice pourra s'appliquer à la fibre optique émettrice.

Selon un premier art antérieur, il est connu d'utiliser une fibre optique amplificatrice ayant un coeur multimode à la longueur d'onde de pompage qui présente une forme polygonale dans un plan de coupe perpendiculaire à l'axe longitudinal de la fibre optique amplificatrice de manière à casser la symétrie radiale de la fibre optique amplificatrice afin que les modes guidés traversent plus souvent la zone dopée avec la terre rare. Un inconvénient de cet art antérieur est d'être complexe et coûteux à réaliser. Par ailleurs, cet art antérieur a l'inconvénient de ne permettre l'utilisation que d'un nombre restreint de modes pour réaliser le pompage de la fibre optique amplificatrice.

Selon un deuxième art antérieur, par exemple connu du brevet américain US 5907652, il est connu d'utiliser à la périphérie du coeur multimode à la longueur d'onde de pompage une tranche périphérique essentiellement constituée de cavités d'air séparées entre elles par des parois de silice. L'indice effectif de cette tranche périphérique étant très bas, l'ouverture numérique de la fibre optique amplificatrice devient très élevée et par conséquent le nombre de modes à la longueur d'onde de pompage utilisables pour réaliser le pompage augmente beaucoup. Un inconvénient de cet art antérieur est de ne pas utiliser au mieux tous les modes disponibles pour réaliser le pompage en ce sens qu'un nombre important de modes injectés dans la fibre optique amplificatrice pour réaliser le pompage traverse relativement rarement la zone dopée avec la terre rare et d'autant plus que la zone dopée est localisée au centre de la fibre optique, ces modes traversant relativement rarement la zone dopée participent peu au pompage, ils sont donc peu utilisés.

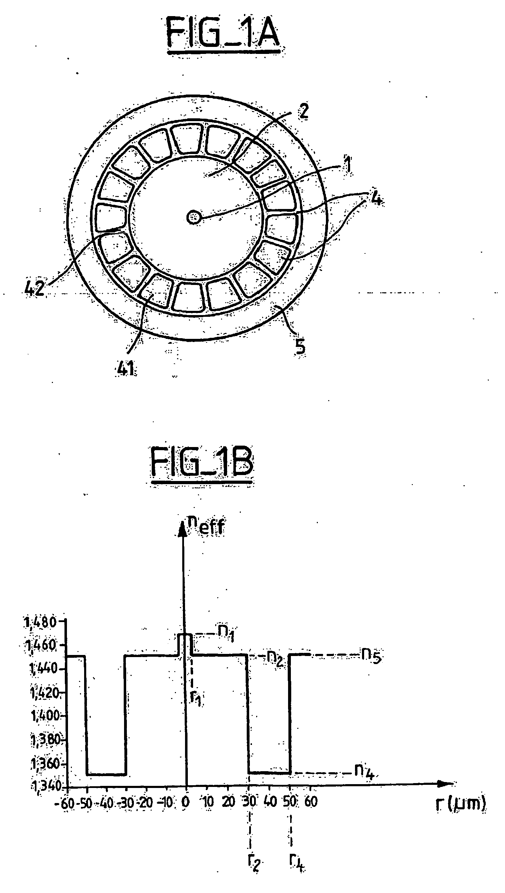

La fibre optique amplificatrice selon le deuxième art antérieur est d'une part représentée selon une coupe transversale à l'axe longitudinal de la fibre optique au niveau de la figure 1A et d'autre part son profil d'indice est représenté en fonction de la distance ou centre de la fibre optique au niveau de la figure 1B. Sur la figure 1A, la fibre optique amplificatrice comprend, du centre de la fibre optique vers sa périphérie, un coeur 1 monomode sur la plage de longueur d'onde signal, la majeure partie 2 d'un coeur multimode à la longueur d'onde de pompage, le coeur multimode incluant également le coeur 1 monomode, une tranche 4 périphérique essentiellement constituée de cavités 41 d'air séparées entre elles par des parois 42 de silice, une gaine 5 extérieure. Sur la figure 1B, le profil d'indice effectif $n_{eff}$ de la fibre optique est représenté en fonction du rayon r exprimé en μm, l'abscisse 0 représentant le centre de la fibre optique. Du centre de la fibre optique jusqu'au rayon $r_1$, s'étend le coeur 1 monomode d'indice constant $n_1$. Entre le rayon $r_1$ et le rayon $r_2$, s'étend la majeure partie 2 du coeur multimode présentant un indice constant $n_2$, le coeur multimode s'étendant du centre de la fibre optique jusqu'au rayon $r_2$. Entre le rayon $r_2$ et le rayon $r_4$, s'étend la tranche 4 périphérique essentiellement constituée de cavités d'air, cette tranche 4 périphérique présentant un indice constant $n_4$. Entre le rayon $r_4$ et un rayon $r_5$ non représenté sur la figure 1B, s'étend la gaine 5 extérieure d'indice constant $n_5$. Les indices $n_2$ et $n_5$ sont égaux.

Ce deuxième type d'art antérieur peut également être trouvé avec des variantes dans les documents suivants : demande de brevet internationale WO01/42829, demande de brevet européenne EP1199581, brevet américain US6480659, demande de brevet internationale WO 02/078138, demande de brevet américaine US 2002/0197039, demande de brevet européenne EP1241491.

Les documents "Jacketed air-clad cladding pumped ytterbium - doped fibre laser with wide tuning range", Sahu et al., Electronics Letters, Vol. 37, N° 18, 2001, "Cladding-mode-resonances in air-silica microstructure optical fibers", Journal of Lightwave Technology, Vol. 18, N° 18, Eggleton et al., et WO 03/019257 divulguent des fibres optiques dont le profil d'indice est optimisé pour du pompage par cladding. Le document US 4,465,334 divulgue une fibre optique dont le profil d'indice comprend plusieurs couches, la deuxième couche présentant un gradient d'indice décroissant pour réduire la dispersion inter-modale.

Le document " Use of graded elliptical cladding for efficient pumping of doped fiber cores, Ankiewicz et al., Optics Communications, 133 (1997), 82-86, divulgue une fibre dopée terre rare dont le profil possède une symétrie elliptique et un gradient d'indice décroissant dans le coeur afin d'améliorer l'absorption de la pompe.

L'invention peut être vue comme un perfectionnement du deuxième art antérieur. La fibre optique selon l'invention, tout comme le deuxième art antérieur, augmente le nombre de modes disponibles pour réaliser le pompage en diminuant l'indice d'une tranche périphérique située en périphérie du coeur multimode. La fibre optique selon l'invention, à la différence du deuxième art antérieur, améliore l'efficacité des modes utilisés pour réaliser le pompage en augmentant le recouvrement entre lesdits modes et la zone dopée avec la terre rare de manière à améliorer l'absorption de l'énergie lumineuse à la longueur d'onde de pompage par la fibre optique amplificatrice. Pour cela, l'indice d'une partie du coeur multimode au moins est en forme de gradient décroissant du centre de la fibre optique vers sa périphérie afin de recentrer lesdits modes, c'est-à-dire de recentrer leur énergie. De plus, de manière à utiliser lesdits modes encore plus efficacement, les pertes par fuite desdits modes sont réduites réduite pour certains modes et supprimées pour d'autres modes grâce au niveau d'indice de la majorité du coeur multimode qui se trouve au-dessus du niveau d'indice de la gaine extérieure. Les modes dont les pertes par fuite sont supprimées sont appelés modes guidés. Le coeur multimode dont le rayon extérieur dans un plan de coupe transversal à l'axe de la fibre optique est sensiblement circulaire est nettement plus simple et presque aussi efficace que celui du premier art antérieur pour améliorer le recouvrement entre les modes servant au pompage et la zone dopée avec la terre rare. Le rayon extérieur du coeur monomode est également sensiblement circulaire. La relation $n_1>n_2>n_5$ est obtenue par des différences de dopage entre les tranches, à la différence de l'indice effectif minimum $n_4$ qui est obtenu par l'utilisation de cavités d'air ou d'autres matériaux d'indice très bas.

L'invention propose une fibre optique, au moins en partie dopée avec une terre rare de manière à pouvoir transformer de l'énergie lumineuse à une longueur d'onde de pompage en énergie lumineuse sur une plage de longueur d'onde signal à laquelle n'appartient pas la longueur d'onde de pompage, comprenant successivement, du centre de la fibre optique vers sa périphérie, une tranche centrale (1) d'indice maximum $n_1$ et de rayon $r_1$, une tranche périphérique (2) d'indice maximum $n_2$ et

de rayon $r_2$, une tranche périphérique (4) d'indice effectif minimum $n_4$ et de rayon $r_4$, une tranche périphérique (5) d'indice maximum $n_5$ et de rayon $r_5$, avec $n_1>n_2>n_4$, avec $n_5>n_4$ et avec $r_1<r_2<r_4<r_5$, les indices et les rayons étant déterminés de sorte que, d'une part, sur la plage de longueur d'onde signal, la fibre optique présente un coeur monomode s'étendant du centre de la fibre optique jusqu'au rayon $r_1$, et d'autre part, à la longueur d'onde de pompage, la fibre optique présente un coeur multimode s'étendant du centre de la fibre optique jusqu'au rayon $r_2$, l'indice effectif minimum $n_4$ étant suffisamment faible pour que l'ouverture numérique de la fibre optique à la longueur d'onde de pompage soit supérieure à 0.25, caractérisée en ce que $n_2>n_5$, et en ce que la tranche périphérique (2) d'indice maximum $n_2$ présente une forme en gradient décroissant de manière à recentrer l'énergie lumineuse d'au moins une partie des modes guidés à la longueur d'onde de pompage afin d'augmenter le recouvrement entre lesdits modes guidés recentrés et la partie (6) de la fibre optique qui est dopée avec la terre rare.

L'invention sera mieux comprise et d'autres particularités et avantages apparaîtront à l'aide de la description ci-après et des dessins joints, donnés à titre d'exemples, où :

- la figure 1A représente schématiquement une vue en coupe transversale à l'axe de la fibre optique, d'une fibre optique amplificatrice selon le deuxième art antérieur ;
- la figure 1B représente schématiquement le profil d'indice d'une fibre optique amplificatrice selon le deuxième art antérieur ;
- la figure 2A représente schématiquement une vue en coupe transversale à l'axe de la fibre optique, d'un exemple d'un premier mode de réalisation d'une fibre optique amplificatrice selon l'invention ;
- la figure 2B représente schématiquement un exemple de profil d'indice d'un premier mode de réalisation d'une fibre optique amplificatrice selon l'invention ;
- la figure 3A représente schématiquement une vue en coupe transversale à l'axe de la fibre optique, d'un exemple d'un deuxième mode préférentiel de réalisation d'une fibre optique amplificatrice selon l'invention ;
- la figure 3B représente schématiquement un exemple de profil d'indice d'un deuxième mode préférentiel de réalisation d'une fibre optique amplificatrice selon l'invention.

La fibre optique amplificatrice est le siège d'un pompage longitudinal transformant de l'énergie à une longueur d'onde de pompage en de l'énergie sur une plage de longueur d'onde signal. De préférence, la longueur d'onde de pompage vaut environ 980nm. Dans une première application où la fibre optique est amplificatrice, la plage de longueur d'onde signal est comprise entre 1460nm et 1650nm. La terre rare contient alors de préférence de l'Erbium. Dans une deuxième application, où la fibre optique est émettrice laser, la plage de longueur d'onde signal inclut 1060nm. La terre rare contient alors de préférence de l'Ytterbium.

En se replaçant dans le cadre de la première application, la terre rare, de préférence de l'Erbium, est disposée dans une partie de la fibre optique amplificatrice. De préférence, la partie située à l'intérieur de la tranche périphérique d'indice maximum $n_2$ mais à l'extérieur de la tranche centrale d'indice maximum $n_1$, est dopée avec la terre rare. La terre rare est disposée au moins dans le coeur multimode, de préférence au moins en partie à l'extérieur du coeur monomode. La terre rare peut aussi être disposée en partie dans le coeur monomode ou encore seulement dans le coeur monomode comme dans le deuxième art antérieur, mais avantageusement le coeur monomode ne contient pas de terre rare afin d'éviter à cette terre rare de réabsorber de l'énergie lumineuse sur la plage de longueur d'onde signal de manière trop importante, ce qui augmente encore l'efficacité du pompage en réduisant les pertes. De préférence, seule une couronne située dans le coeur multimode et juste à l'extérieur et en contact avec le coeur monomode contient la terre rare. Cette couronne est située juste à l'extérieur et en contact avec la tranche centrale. Dans le profil d'indice de la fibre optique amplificatrice selon l'invention, cette couronne correspond avantageusement à un plateau horizontal situé entre la tranche centrale et la tranche périphérique en forme de gradient décroissant et d'indice maximum $n_2$. De préférence, la partie de la fibre optique qui est dopée avec la terre rare s'étend au moins entre $3.5\mu$m et $5.5\mu$m à partir du centre de la fibre optique, cette partie s'étend par exemple typiquement de $3\mu$m à $6\mu$m.

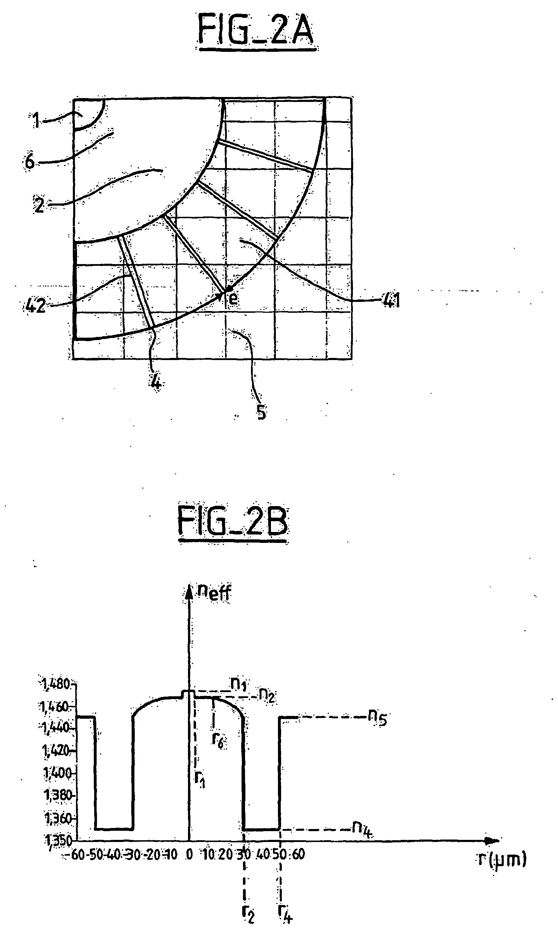

La figure 2A représente schématiquement une vue en coupe transversale à l'axe de la fibre optique, d'un exemple d'un premier mode de réalisation d'une fibre optique amplificatrice selon l'invention. Sur la figure 2A, qui ne représente par souci de clarté qu'un quart de la vue en coupe, la fibre optique amplificatrice comprend, du centre de la fibre optique vers sa périphérie, un coeur 1 monomode sur la plage de longueur d'onde signal, un anneau 6 dopé avec la terre rare, la majeure partie 2 d'un coeur multimode à la longueur d'onde de pompage, le coeur multimode incluant également le coeur 1 monomode et l'anneau 6, une tranche 4 périphérique essentiellement constituée de cavités 41 d'air séparées entre elles par des parois 42 de silice, une gaine 5 extérieure. Les parois 42 présentent de préférence une épaisseur e radialement constante au moins sur une longueur radiale donnée, c'est-à-dire constante le long d'un rayon reliant le centre de la fibre optique à sa périphérie, au moins sur une partie substantielle de la paroi, c'est-à-dire partout sauf aux extrémités situées au niveau de l'interface entre la tranche 4 périphérique et les autres tranches ou au niveau de l'interface entre les couches de cavités d'air s'il y a plusieurs couches. On parlera dans la suite plus simplement d'épaisseur radialement constante.

La figure 2B représente schématiquement un exemple de profil d'indice d'un premier mode de réalisation d'une fibre optique amplificatrice selon l'invention. Sur la figure 2B, le profil d'indice effectif neff de la fibre optique est représenté en fonction du rayon r exprimé en $\mu$m, l'abscisse 0 représentant le centre de la fibre optique. Du centre de la fibre optique jusqu'au rayon $r_1$, s'étend le coeur 1 monomode d'indice constant $n_1$. Entre le rayon $r_1$ et le rayon $r_6$, s'étend l'anneau 6 dopé avec la terre rare qui présente un indice constant $n_2$, égal à l'indice maximum $n_2$ de la tranche 2 périphérique qui présente un indice en forme de gradient décroissant. Entre le rayon $r_6$ et le rayon $r_2$, s'étend la majeure partie 2 du coeur multimode présentant un indice maximum $n_2$ et une forme en gradient décroissant, le coeur multimode s'étendant du centre de la fibre optique jusqu'au rayon $r_2$. Entre le rayon $r_2$ et le rayon $r_4$, s'étend la tranche 4 périphérique essentiellement constituée de cavités d'air, cette tranche 4 périphérique présentant un indice constant $n_4$. Entre le rayon $r_4$ et un rayon $r_5$ non représenté sur la figure 1B, s'étend la gaine 5 extérieure d'indice constant $n_5$. L'indice maximum $n_2$ est supérieur à l'indice $n_5$. Toute la tranche périphérique 2 présente un indice supérieur à l'indice $n_5$.

La tranche 2 périphérique présente une forme de gradient décroissant, c'est-à-dire présente un profil d'indice en forme de gradient décroissant. Ce gradient décroissant est de préférence continu et en pente douce. La tranche 2 périphérique présente de préférence une forme en $\alpha$. Le profil d'indice n(r) obéit à la formule classique suivante

$$n(r) = n_{max} \cdot (1 - 2 \cdot \Delta \cdot (\frac{r - r_{min}}{r_{max} - r_{min}})^\alpha)^{\frac{1}{2}} \; ; \; n(r)$$

représente la valeur du profil d'indice en fonction du rayon ; $n_{max}$ représente l'indice maximum $n_2$ de la tranche 2 ; $r_{min}$ et $r_{max}$ représentent respectivement le début et la fin de la tranche 2 ; $\Delta$ représente la variation d'indice entre le début et la fin de la tranche 2. $\alpha = 1$ correspond à une forme triangulaire. $\alpha = 2$ correspond à une forme parabolique. $\alpha = \infty$ correspond à une forme rectangulaire. Cette forme en $\alpha$ est de préférence pas trop faible car le nombre de modes diminue, et pas trop élevée car sinon le recentrage des modes participant au pompage est moins efficace. De préférence, la tranche périphérique d'indice maximum $n_2$ présente une forme en $\alpha$, avec $\alpha < 5$. De préférence, la tranche périphérique d'indice maximum $n_2$ présente une forme en $\alpha$, avec $\alpha > 2$. Avantageusement, la tranche périphérique d'indice maximum $n_2$ présente une forme en $\alpha$, avec $\alpha$ valant environ 3, c'est-à-dire compris entre 2.5 et 3.5. Avec par exemple une forme en $\alpha$ avec $\alpha$ valant 3, le recouvrement entre les modes recentrés et l'anneau dopé avec la terre rare est nettement meilleur que dans le cas du deuxième art antérieur. Il y a concordance entre les modes présentant le meilleur recouvrement avec l'anneau dopé avec la terre rare et les modes qui sont le mieux guidés dans la fibre optique c'est-à-dire les modes qui se propagent le mieux le long de cette fibre optique. Il est intéressant que ces modes qui sont à même de mieux se propager dans la fibre optique soient aussi ceux qui sont le plus efficace pour réaliser le pompage grâce à leur recouvrement élevé avec l'anneau dopé avec la terre rare.

La façon de réaliser les cavités d'air consiste par exemple à assembler à une préforme classique des cavités et ou des tubes comprenant de l'air. La préforme complexe ainsi constituée pourra alors être fibrée. Le principal mérite des grandes cavités d'air est de diminuer beaucoup l'indice de la tranche périphérique 4 de manière à augmenter beaucoup l'ouverture numérique de la fibre optique à la longueur d'onde de pompage de façon à ce que le nombre de modes participant au pompage puisse devenir très élevé. De préférence, pour obtenir ce bas indice, la tranche périphérique 4 d'indice effectif minimum $n_4$ inclut des cavités 41 d'air séparées entre elles par des parois 42 et remplissant la majorité de ladite tranche périphérique 4 d'indice effectif minimum $n_4$. D'autres matériaux que l'air, présentant un indice également relativement bas, pourraient être utilisés, mais l'air est peu coûteux et présente un indice très bas, il est donc particulièrement intéressant. Le coeur multimode surélevé par rapport à la gaine 5 extérieure empêche la fuite des modes guidés participant le plus au pompage, lesquels modes présentent un indice effectif supérieur à l'indice de la gaine 5 extérieure, vers la gaine 5 extérieure au travers de la tranche périphérique 4.

Dans une réalisation optionnelle, afin de diminuer encore l'indice effectif de la tranche périphérique 4, les parois 42 sont en en verre contenant du bore ou en verre contenant du fluor au lieu d'être en silice. Les parois 42 en verre contenant du bore ou en verre contenant du fluor créent des contraintes ce qui présente l'avantage d'augmenter le couplage de modes mais qui présente aussi l'inconvénient de fragiliser la structure augmentant ainsi le risque de casse.

Dans une autre réalisation optionnelle, afin de diminuer encore l'indice effectif de la tranche périphérique 4, les cavités 41 d'air sont disposées sur plusieurs rangs et les parois 42 de certaines desdites cavités 41 d'air situées vers la périphérie de la fibre optique sont préférentiellement en plastique.

De préférence, les parois 42 présentent une épaisseur radialement constante. Ainsi, les fuites des modes vers la gaine 5 extérieure sont diminuées. Dans le cas de parois 42 s'élargissant au fur et à mesure que la distance au centre de la fibre optique augmente, l'indice effectif de la tranche périphérique 4 augmente avec la distance au centre de la fibre optique au lieu de rester constant. Cette augmentation d'indice tendant à rejoindre celui de la gaine 5 extérieure favorise la fuite des modes vers la gaine 5 extérieure. Au contraire, le maintien d'un indice effectif bas sur l'ensemble de la tranche périphérique 4 permet de mieux guider les modes et donc de diminuer les pertes par fuite. Changer le matériau des parois 42 vers la périphérie de la fibre optique pour diminuer l'indice effectif peut aussi compenser l'augmentation de ce même indice effectif liée à l'augmentation de l'épaisseur des parois 42.

La présence de grandes cavités 41 d'air dans la tranche périphérique 4 diminue l'indice effectif, et en particulier l'indice effectif minimum $n_4$, de la tranche périphérique 4 et augmente ainsi la différence d'indice entre le coeur multimode et la tranche périphérique 4, augmentant ainsi directement l'ouverture numérique de la fibre optique à la longueur d'onde de pompage. La présence des grandes cavités 41 d'air augmente fortement l'ouverture numérique de la fibre optique en fonction de la longueur d'onde (lorsque la longueur d'onde augmente), tandis qu'en l'absence de telles cavités 41 d'air, l'ouverture numérique de la fibre optique diminue légèrement en fonction de la longueur d'onde (lorsque la longueur d'onde augmente). De préférence, l'indice effectif minimum $n_4$ est suffisamment petit pour que l'ouverture numérique de la fibre optique à la longueur d'onde de pompage soit supérieure à 0.3. De préférence, l'indice effectif minimum $n_4$ est suffisamment petit pour que l'ouverture numérique de la fibre optique à la longueur d'onde de pompage soit supérieure à 0.45. De préférence, l'indice effectif minimum $n_4$ est inférieur à 1.43 pour une longueur d'onde valant 980nm. Avantageusement, l'indice effectif minimum $n_4$ est inférieur à 1.40 pour une longueur d'onde valant 980nm. Avantageusement, l'indice effectif minimum $n_4$ est inférieur à 1.35 pour une longueur d'onde valant 980nm. De préférence, l'indice minimum effectif $n_4$ est suffisamment petit pour que plus de 1000 modes puissent être injectés dans la fibre optique à la longueur d'onde pompage.

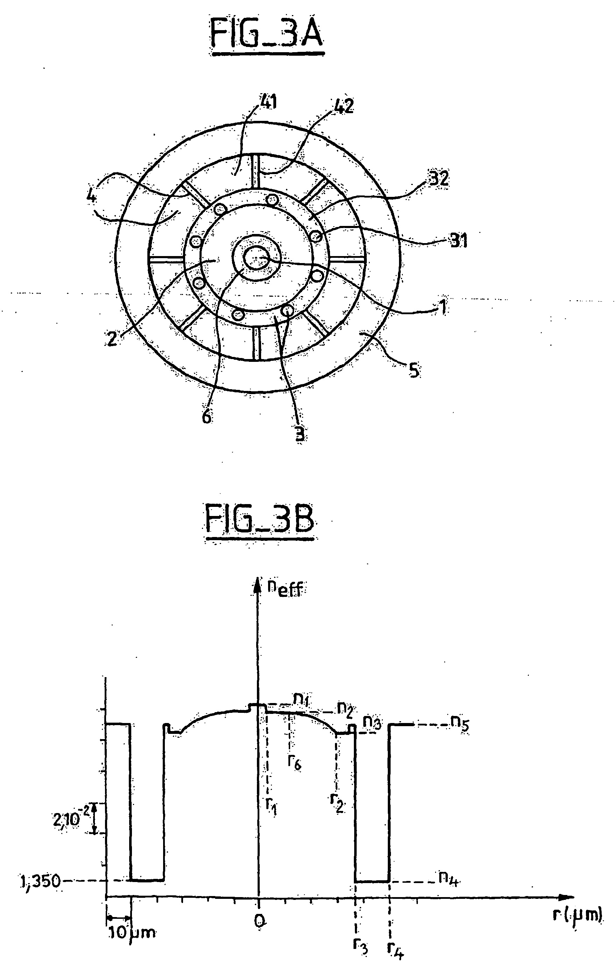

La figure 3A représente schématiquement une vue en coupe transversale à l'axe de la fibre optique, d'un exemple d'un deuxième mode préférentiel de réalisation d'une fibre optique amplificatrice selon l'invention. Sur la figure 3A, la fibre optique amplificatrice comprend, du centre de la fibre optique vers sa périphérie, un coeur 1 monomode sur la plage de longueur d'onde signal, un anneau 6 dopé avec la terre rare, la majeure partie 2 d'un coeur multimode à la longueur d'onde de pompage, le coeur multimode incluant également le coeur 1 monomode et l'anneau 6, une couche 3 essentiellement constituée de silice séparatrice 32 comprenant une minorité de cavités 31 d'air, une tranche 4 périphérique essentiellement constituée de cavités 41 d'air séparées entre elles par des parois 42 de silice, une gaine 5 extérieure. Les cavités 31 sont plus petites et de préférence nettement plus petites que les cavités 41. Par comparaison entre elles, sauf mention contraire, les cavités 31 seront appelées dans la suite du texte petites cavités tandis que les cavités 41 seront appelées dans la suite du texte grandes cavités.

La figure 3B représente schématiquement un exemple de profil d'indice d'un deuxième mode préférentiel de réalisation d'une fibre optique amplificatrice selon l'invention. Sur la figure 3B, le profil d'indice effectif neff de la fibre optique est représenté en fonction du rayon r exprimé en $\mu$m, l'abscisse 0 représentant le centre de la fibre optique. Du centre de la fibre optique jusqu'au rayon $r_1$, s'étend le coeur 1 monomode d'indice constant $n_1$. Entre le rayon $r_1$ et le rayon $r_6$, s'étend l'anneau 6 dopé avec terre rare qui présente un indice constant $n_2$, égal à l'indice maximum $n_2$ de la tranche 2 périphérique qui présente un indice en forme de gradient décroissant. Entre le rayon $r_6$ et le rayon $r_2$, s'étend la majeure partie 2 du coeur multimode présentant un indice maximum $n_2$ et une forme en gradient décroissant, le coeur multimode s'étendant du centre de la fibre optique jusqu'au rayon $r_2$. Entre le rayon $r_2$ et le rayon $r_3$, s'étend la tranche 3 périphérique essentiellement constituée de silice séparatrice contenant quelques petites cavités d'air espacées entre elles, le profil d'indice de cette tranche 3 périphérique comprenant, du centre de la fibre optique vers sa périphérie, d'abord un petit creux puis une petite bosse. Entre le rayon $r_3$ et le rayon $r_4$, s'étend la tranche 4 périphérique essentiellement constituée de grandes cavités d'air, cette tranche 4 périphérique présentant un indice constant $n_4$. Entre le rayon $r_4$ et un rayon $r_5$ non représenté sur la figure 1B, s'étend la gaine 5 extérieure d'indice constant $n_5$. L'indice maximum $n_2$ est supérieur à l'indice $n_5$. La majorité de la tranche périphérique 2 présente un indice supérieur à l'indice $n_5$. La modélisation des tranches périphériques contenant des petites ou grandes cavités d'air par un indice effectif est d'autant plus valable que la disproportion entre la part de silice et la part d'air dans ces tranches périphériques est importante, ce qui fonctionne ici très bien dans la mesure où la tranche périphérique 3 comprend beaucoup plus de silice que d'air et où la tranche périphérique 4 comprend beaucoup plus d'air que de silice.

De préférence, la fibre optique comprend une tranche périphérique 3 d'indice effectif maximum $n_3$ et de rayon $r_3$, avec $n_2 > n_3 > n_4$ et avec $r_2 < r_3 < r_4$. De préférence, la tranche périphérique 3 d'indice effectif maximum $n_3$ présente un indice constant, la tranche périphérique 5 d'indice maximum $n_5$, qui est la gaine 5 extérieure, présente un indice constant, et on a la relation $n_3 = n_5$.

De préférence, la tranche périphérique 3 d'indice effectif maximum $n_3$ présente des non-uniformités longitudinales par rapport à l'axe de la fibre optique de manière à améliorer le couplage entre modes à la longueur d'onde de pompage. Ces non uniformités sont de préférence disposées à l'extérieur et à la périphérie du coeur multimode de manière à ce que les modes guidés participant le plus au pompage et étant situés à l'intérieur du coeur multimode ne voient pas ces défauts. De préférence, à la longueur d'onde de pompage, les non-uniformités longitudinales couplent l'énergie de modes à fuite soit dans des modes guidés, soit dans des modes à fuite mais présentant des pertes réduites. Lesdits modes à fuite, dont une certaine partie a tendance à être en partie au moins en dehors du coeur multimode, rencontrent les non-uniformités qui couplent une fraction de leur énergie aux modes guidés participant le plus au pompage car présentant le recouvrement le plus important avec la zone dopée avec la terre rare, c'est-à-dire sur les figures 2A et 3A par exemple l'anneau 6. En plus d'améliorer l'efficacité propre de pompage des modes guidés comme dans le premier mode de réalisation, le deuxième mode préférentiel de réalisation récupère l'énergie inutilisée des modes à fuite pour la transférer aux modes guidés dont l'énergie est plus efficacement utilisée pour le pompage. De préférence, les non-uniformités longitudinales sont des cavités 31 d'air s'étendant longitudinalement par rapport à l'axe de la fibre optique. De préférence, lesdites cavités 31 d'air sont réparties dans une zone annulaire qui est la zone annulaire circonscrite intérieurement et extérieurement aux cavités 31, qui est située dans la tranche périphérique 3 mais qui ne remplit pas forcément toute la tranche périphérique 3, et qui est située autour du centre de la fibre optique et lesdites cavités 31 d'air remplissent une minorité de ladite zone annulaire, car les cavités 31 sont très espacées les unes des autres.

Dans la suite de ce paragraphe sont données des caractéristiques avantageuses du profil d'indice améliorant certaines propriétés de la fibre optique amplificatrice. De préférence, la tranche centrale 1 présente un indice constant. De préférence, la tranche périphérique 5 d'indice maximum $n_5$ présente un indice constant, elle est aussi appelée gaine 5 extérieure sur les figures 2A et 3A. De préférence, le rayon $r_2$ est supérieur à $25\,\mu m$, il vaut typiquement environ $30\,\mu m$, ce qui assure un comportement largement multimode à la longueur d'onde de pompage. De préférence, la différence d'indice entre la tranche centrale 1 et la gaine 5 extérieure vérifie la relation $n_1 - n_5 > 10.10^{-3}$.

Dans le deuxième mode préférentiel de réalisation, comme par exemple sur la figure 3B, de préférence, le profil d'indice effectif de la fibre optique présente, à la longueur d'onde de 1550nm, successivement du centre de la fibre optique vers sa périphérie, une zone constante, une chute brutale, une zone constante, une décroissance en gradient, un petit creux, une petite bosse, une chute brutale, une zone constante, une remontée brutale, une zone constante. Le petit creux et la petite bosse présentent une amplitude en indice et une étendue en rayon plus faibles et même nettement plus faibles que d'une part, pour l'indice, les chutes et la remontée brutales, et que d'autre part, pour le rayon, les zones constantes et en gradient décroissant.

## Revendications

**1.** Fibre optique,
au moins en partie dopée avec une terre rare de manière à pouvoir transformer de l'énergie lumineuse à une longueur d'onde de pompage en énergie lumineuse sur une plage de longueur d'onde signal à laquelle n'appartient pas la longueur d'onde de pompage,
comprenant successivement, du centre de la fibre optique vers sa périphérie,

une tranche centrale (1) d'indice maximum $n_1$ et de rayon $r_1$,

une tranche périphérique (2) d'indice maximum $n_2$ et de rayon $r_2$,

une tranche périphérique (4) d'indice effectif minimum $n_4$ et de rayon $r_4$,

une tranche périphérique (5) d'indice maximum $n_5$ et de rayon $r_5$,

avec $n_1 > n_2 > n_4$, avec $n_5 > n_4$ et avec $r_1 < r_2 < r_4 < r_5$, les indices et les rayons étant déterminés de sorte que,

d'une part, sur la plage de longueur d'onde signal, la fibre optique présente un coeur monomode s'étendant du centre de la fibre optique jusqu'au rayon $r_1$, et d'autre part, à la longueur d'onde de pompage, la fibre optique présente un coeur multimode s'étendant du centre de la fibre optique jusqu'au rayon $r_2$, l'indice effectif minimum $n_4$ de la tranche périphérique (4) étant suffisamment faible pour que l'ouverture numérique de la fibre optique à la longueur d'onde de pompage soit supérieure à 0.25,

**caractérisée en ce que** $n_2 > n_5$,

**en ce que** le rayon extérieur de la tranche périphérique (2) dans un plan de coupe transversal à l'axe de la fibre optique est sensiblement circulaire et **en ce que** la tranche périphérique (2) d'indice maximum $n_2$ présente une forme en gradient décroissant de manière à recentrer l'énergie lumineuse d'au moins une partie des modes guidés à la longueur d'onde de pompage afin d'augmenter le recouvrement entre lesdits modes guidés recentrés et la partie (6) de la fibre optique qui est dopée avec la terre rare.

2. Fibre optique selon la revendication 1, **caractérisée en ce que** la tranche périphérique (2) d'indice maximum $n_2$ présente une forme en $\alpha$, avec $\alpha < 5$.

3. Fibre optique selon la revendication 2, **caractérisée en ce que** la tranche périphérique (2) d'indice maximum $n_2$ présente une forme en $\alpha$, avec $\alpha > 2$.

4. Fibre optique selon la revendication 3, **caractérisée en ce que** la tranche périphérique (2) d'indice maximum $n_2$ présente une forme en $\alpha$, avec $\alpha$ valant environ 3.

5. Fibre optique selon l'une quelconque des revendications précédentes, **caractérisée en ce que** la tranche périphérique (4) d'indice effectif minimum $n_4$ inchut des cavités (41) d'air séparées entre elles par des parois (42) et remplissant la majorité de ladite tranche périphérique (4) d'indice effectif minimum $n_4$.

6. Fibre optique selon la revendication 5, **caractérisée en ce que** les parois (42) sont en verre contenant du bore ou en verre contenant du fluor.

7. Fibre optique selon la revendication 5, **caractérisée en ce que** les cavités (41) d'air sont disposées sur plusieurs rangs et **en ce que** les parois (42) de certaines desdites cavités (41) d'air situées vers la périphérie de la fibre optique sont en plastique.

8. Fibre optique selon l'une quelconque des revendications 5 à 7, **caractérisée en ce que** les parois (42) présentent une épaisseur (e) radialement constante au moins sur une longueur radiale donnée.

9. Fibre optique selon l'une quelconque des revendications précédentes, **caractérisée en ce que** l'indice effectif minimum $n_4$ est suffisamment petit pour que l'ouverture numérique de la fibre optique à la longueur d'onde de pompage soit supérieure à 0.3.

10. Fibre optique selon la revendication 9, **caractérisée en ce que** l'indice effectif minimum $n_4$ est suffisamment petit pour que l'ouverture numérique de la fibre optique à la longueur d'onde de pompage soit supérieure à 0.45.

11. Fibre optique selon l'une quelconque des revendications précédentes, **caractérisée en ce que** l'indice effectif minimum $n_4$ est inférieur à 1.43 pour une longueur d'onde valant 980m.

12. Fibre optique selon la revendication 11, **caractérisée en ce que** l'indice effectif minimum $n_4$ est inférieur à 1.40 pour une longueur d'onde valant 980nm.

13. Fibre optique selon la revendication 12, **caractérisée en ce que** l'indice effectif minimum $n_4$ est inférieur à 1.35 pour une longueur d'onde valant 980nm.

14. Fibre optique selon l'une quelconque des revendications précédentes, **caractérisée en ce que** la partie (6) située à l'intérieur de la tranche périphérique (2) d'indice maximum $n_2$ mais à l'extérieur de la tranche centrale (1) d'indice maximum $n_1$ est dopée avec la terre rare.

15. Fibre optique selon la revendication 14, **caractérisée en ce que** ladite partie (6) dopée avec la terre rare s'étend au moins entre $3.5\mu m$ et $5.5\mu m$ à partir du centre de la fibre optique.

16. Fibre optique selon l'une quelconque des revendications précédentes, **caractérisée en ce que** la tranche centrale (1) présente un indice constant.

17. Fibre optique selon l'une quelconque des revendications précédentes, **caractérisée en ce que** la fibre optique comprend une tranche périphérique (3) d'indice effectif maximum $n_3$ et de rayon $r_3$, avec $n_2 > n_3 > n_4$ et avec

$r_2 < r_3 < r_4$.

**18.** Fibre optique selon la revendication 17, **caractérisée en ce que** la tranche périphérique (3) d'indice effectif maximum $n_3$ présente un indice constant, **en ce que** la tranche périphérique (5) d'indice maximum $n_5$ présente un indice constant, et **en ce que** $n_3 = n_5$.

**19.** Fibre optique selon la revendication 17 ou 18, **caractérisée en ce que** la tranche périphérique (3) d'indice effectif maximum $n_3$ présente des non-uniformités longitudinales (31) par rapport à l'axe de la fibre optique de manière à améliorer le couplage entre modes à la longueur d'onde de pompage.

**20.** Fibre optique selon la revendication 19, **caractérisée en ce qu'**à la longueur d'onde de pompage, les non-uniformités longitudinales (31) couplent l'énergie de modes à fuite dans des modes guidés.

**21.** Fibre optique selon la revendication 19 ou 20, **caractérisée en ce qu'**à la longueur d'onde de pompage, les non-uniformités longitudinales (31) couplent l'énergie de modes à fuite dans des modes à fuite mais présentant des pertes réduites.

**22.** Fibre optique selon l'une quelconque des revendications 19 à 21, **caractérisée en ce que** les non-uniformités longitudinales (31) sont des cavités (31) d'air s'étendant longitudinalement.

**23.** Fibre optique selon la revendication 22, **caractérisée en ce que** lesdites cavités (31) d'air sont réparties dans une zone annulaire située autour du centre de la fibre optique et **en ce que** lesdites cavités (31) d'air remplissent une minorité de ladite zone annulaire.

**24.** Fibre optique selon l'une quelconque des revendications précédentes, **caractérisée en ce que** la fibre optique est une fibre optique amplificatrice et **en ce que** la plage de longueur d'onde signal est comprise entre 1460nm et 1650nm.

**25.** Fibre optique selon la revendication 24, **caractérisée en ce que** la terre rare contient de l'Erbium.

**26.** Fibre optique selon l'une quelconque des revendications précédentes, **caractérisée en ce que** la fibre optique est une fibre optique émettrice laser et **en ce que** la plage de longueur d'onde signal inclut la longueur d'onde valant 1060nm.

**27.** Fibre optique selon la revendications 26, **caractérisée en ce que** la terre rare contient de l'Ytterbium.

**28.** Fibre optique selon l'une quelconque des revendications précédentes, **caractérisée en ce que** la longueur d'onde de pompage vaut 980nm.

**29.** Fibre optique selon l'une quelconque des revendications précédentes, **caractérisée en ce que** la tranche périphérique (5) d'indice maximum $n_5$ présente un indice constant.

**30.** Fibre optique selon l'une quelconque des revendications précédentes, **caractérisée en ce que** le rayon $r_2$ est supérieur à $25\mu$m.

**31.** Fibre optique selon l'une quelconque des revendications précédentes, **caractérisée en ce que** le profil d'indice de la fibre optique présente un plateau horizontal (6) situé entre la tranche centrale (1) et la tranche périphérique (2) d'indice maximum $n_2$.

**32.** Fibre optique selon l'une quelconque des revendications précédentes, **caractérisée en ce que** l'indice minimum effectif $n_4$ est suffisamment petit pour que plus de 1000 modes puissent être injectés dans la fibre optique à la longueur d'onde pompage.

**33.** Fibre optique selon l'une quelconque des revendications précédentes, **caractérisée en ce que** le profil d'indice effectif de la fibre optique présente, à la longueur d'onde de 1550nm, successivement du centre de la fibre optique vers sa périphérie,
entre le centre de la fibre optique jusqu'au rayon $r_1$ le tranche centrale (1) présente une indice constant $n_1$;
entre le rayon $r_1$ et le rayon $r_6$ la partie (6) présente un indice constant $n_2$ avec $n_2 < n_1$;
entre le rayon $r_6$ et le rayon $r_2$ un indice maximum $n_2$ présente une forme en gradient décroissant jusq'à $n_3$ avec $n_3 < n_2$;
entre le rayon $r_2$ et la rayon $r_3$ la trance (3) périphérique d'indice effective maximum $n_3$ comprenant du centre de la fibre optique vers sa périphérie d'abord un indice constant $n_3$ puis une petite bosse avec une indice moins de $n_2$;
entre le rayon $r_3$ et le rayon $r_4$ la tranche (4) périphérique présente une indice constant $n_4$ avec $n_4 < n_3$;
entre le rayon $r_4$ et un rayon $r_5$ la gaine (5) extérieure présente une indice constant $n_5$ avec $n_2 > n_5 > n_4$.

**34.** Fibre optique selon l'une quelconque des revendications précédentes, **caractérisée en ce que** $n_1 - n_5 > 10.10^{-3}$.

**Claims**

**1.** Optical fibre,
at least in part doped with a rare earth so as to be capable of converting light energy at a pump wavelength into light energy over a signal wavelength range which does not include the pump wavelength, comprising successively, from the centre of the optical fibre towards its periphery,

a central portion (1) of maximum index $n_1$ and of radius $r_1$,

a peripheral portion (2) of maximum index $n_2$ and of radius $r_2$,

a peripheral portion (4) of minimum effective index $n_4$ and of radius $r_4$,

a peripheral portion (5) of maximum index $n_5$ and of radius $r_5$,

wherein $n_1>n_2>n_4$, wherein $n_5>n_4$ and wherein $r_1<r_2<r_4<r_5$,

the indices and radii being determined so that,

on the one hand, over the signal wavelength range, the optical fibre has a single-mode core extending from the centre of the optical fibre to the radius $r_1$ and, on the other hand, at the pump wavelength, the optical fibre has a multimode core extending from the centre of the optical fibre to the radius $r_2$,

the minimum effective index $n_4$ of the peripheral portion (4) being sufficiently low for the numerical aperture of the optical fibre at the pump wavelength to be greater than 0.25,

**characterised in that** $n_2>n_5$,

**in that** the outside radius of the peripheral portion (2) in a section plane extending transversely to the axis of the optical fibre is substantially circular;

and **in that** the peripheral portion (2) of maximum index $n_2$ has a decreasing-gradient shape so as to re-centre the light energy of at least some of the modes guided at the pump wavelength in order to increase the overlap between said re-centred guided modes and that part (6) of the optical fibre which is doped with the rare earth.

2. Optical fibre according to claim 1, **characterised in that** the peripheral portion (2) of maximum index $n_2$ has an $\alpha$ shape wherein $\alpha<5$.

3. Optical fibre according to claim 2, **characterised in that** the peripheral portion (2) of maximum index $n_2$ has an $\alpha$ shape wherein $\alpha>2$.

4. Optical fibre according to claim 3, **characterised in that** the peripheral portion (2) of maximum index $n_2$ has an $\alpha$ shape wherein $\alpha$ is equal to about 3.

5. Optical fibre according to any one of the preceding claims, **characterised in that** the peripheral portion (4) of minimum effective index $n_4$ includes air cavities (41) separated from one another by walls (42) and occupying the majority of said peripheral portion (4) of minimum effective index $n_4$.

6. Optical fibre according to claim 5, **characterised in that** the walls (42) are of boron-containing glass or of fluorine-containing glass.

7. Optical fibre according to claim 5, **characterised in that** the air cavities (41) are arranged over a plurality of rows and **in that** the walls (42) of certain of said air cavities (41) located towards the periphery of the optical fibre are of plastics material.

8. Optical fibre according to any one of claims 5 to 7, **characterised in that** the walls (42) have a thickness (e) which is radially constant at least over a given radial length.

9. Optical fibre according to any one of the preceding claims, **characterised in that** the minimum effective index $n_4$ is sufficiently small for the numerical aperture of the optical fibre at the pump wavelength to be greater than 0.3.

10. Optical fibre according to claim 9, **characterised in that** the minimum effective index $n_4$ is sufficiently small for the numerical aperture of the optical fibre at the pump wavelength to be greater than 0.45.

11. Optical fibre according to any one of the preceding claims, **characterised in that** the minimum effective index $n_4$ is less than 1.43 for a wavelength equal to 980 nm.

12. Optical fibre according to claim 11, **characterised in that** the minimum effective index $n_4$ is less than 1.40 for a wavelength equal to 980 nm.

13. Optical fibre according to claim 12, **characterised in that** the minimum effective index $n_4$ is less than 1.35 for a wavelength equal to 980 nm.

14. Optical fibre according to any one of the preceding claims, **characterised in that** the part (6) located at the inside of the peripheral portion (2) of maximum index $n_2$ but at the outside of the central portion (1) of maximum index $n_1$ is doped with the rare earth.

15. Optical fibre according to claim 14, **characterised in that** said part (6) doped with the rare earth extends at least between 3.5 $\mu$m and 5.5 $\mu$m from the centre of the optical fibre.

16. Optical fibre according to any one of the preceding claims, **characterised in that** the central portion (1) has a constant index.

17. Optical fibre according to any one of the preceding claims, **characterised in that** the optical fibre comprises a peripheral portion (3) of maximum effective index $n_3$ and of radius $r_3$, wherein $n_2>n_3>n_4$ and wherein $r_2<r_3<r_4$.

18. Optical fibre according to claim 17, **characterised in that** the peripheral portion (3) of maximum effec-

tive index $n_3$ has a constant index, **in that** the peripheral portion (5) of maximum index $n_5$ has a constant index, and **in that** $n_3 = n_5$.

19. Optical fibre according to claim 17 or 18, **characterised in that** the peripheral portion (3) of maximum effective index $n_3$ has longitudinal non-uniformities (31) relative to the axis of the optical fibre so as to improve coupling between modes at the pump wavelength.

20. Optical fibre according to claim 19, **characterised in that**, at the pump wavelength, the longitudinal non-uniformities (31) couple the energy of leaky modes into guided modes.

21. Optical fibre according to claim 19 or 20, **characterised in that**, at the pump wavelength, the longitudinal non-uniformities (31) couple the energy of leaky modes into modes which are leaky but have reduced losses.

22. Optical fibre according to any one of claims 19 to 21, **characterised in that** the longitudinal non-uniformities (31) are air cavities (31) which extend longitudinally.

23. Optical fibre according to claim 22, **characterised in that** said air cavities (31) are distributed in an annular zone located around the centre of the optical fibre, and **in that** said air cavities (31) occupy a minority of said annular zone.

24. Optical fibre according to any one of the preceding claims, **characterised in that** the optical fibre is an amplifying optical fibre, and **in that** the signal wavelength range is between 1460 nm and 1650 nm inclusive.

25. Optical fibre according to claim 24, **characterised in that** the rare earth comprises erbium.

26. Optical fibre according to any one of the preceding claims, **characterised in that** the optical fibre is a laser-emitting optical fibre, and **in that** the signal wavelength range includes the wavelength equal to 1060 nm.

27. Optical fibre according to claim 26, **characterised in that** the rare earth comprises ytterbium.

28. Optical fibre according to any one of the preceding claims, **characterised in that** the pump wavelength is equal to 980 nm.

29. Optical fibre according to any one of the preceding claims, **characterised in that** the peripheral portion (5) of maximum index $n_5$ has a constant index.

30. Optical fibre according to any one of the preceding claims, **characterised in that** the radius $r_2$ is greater than 25 $\mu$m.

31. Optical fibre according to any one of the preceding claims, **characterised in that** the index profile of the optical fibre has a horizontal plateau (6) located between the central portion (1) and the peripheral portion (2) of maximum index $n_2$.

32. Optical fibre according to any one of the preceding claims, **characterised in that** the minimum effective index $n_4$ is sufficiently small for it to be possible for more than 1000 modes to be injected into the optical fibre at the pump wavelength.

33. Optical fibre according to any one of the preceding claims, **characterised in that** the effective index profile of the optical fibre, at the wavelength 1550 nm, successively from the centre of the optical fibre towards its periphery, is as follows:

> between the centre of the optical fibre and the radius $r_1$, the central portion (1) has a constant index $n_1$;
> between the radius $r_1$ and the radius $r_6$, the part (6) has a constant index $n_2$ wherein $n_2 < n_1$;
> between the radius $r_6$ and the radius $r_2$, a maximum index $n_2$ decreases in a gradient shape to $n_3$ wherein $n_3 < n_2$;
> between the radius $r_2$ and the radius $r_3$, the peripheral portion (3) of maximum effective index $n_3$ comprises from the centre of the optical fibre towards its periphery first a constant index $n_3$ and then a small bump having an index less than $n_2$;
> between the radius $r_3$ and the radius $r_4$, the peripheral portion (4) has a constant index $n_4$ wherein $n_4 < n_3$;
> between the radius $r_4$ and a radius $r_5$, the outer cladding (5) has a constant index $n_5$ wherein $n_2 > n_5 > n_4$.

34. Optical fibre according to any one of the preceding claims, **characterised in that** $n_1 - n_5 > 10 \times 10^{-3}$.

**Patentansprüche**

1. Optische Faser,
   die wenigstens teilweise mit einer seltenen Erde dotiert ist, derart, dass Lichtenergie bei einer Pumpwellenlänge in Lichtenergie in einen Bereich von Signalwellenlängen transformiert werden kann, dem die Pumpwellenlänge nicht angehört,
   die nacheinander, vom Zentrum der optischen Faser zu ihrem Rand umfasst,
   eine zentrale Tranche (1) mit Maximalindex $n_1$ und

Radius $r_1$,

eine Randtranche (2) mit Maximalindex $n_2$ und Radius $r_2$,

eine Randtranche (4) mit effektivem Minimalindex $n_4$ und Radius $r_4$, eine Randtranche (5) mit Maximalindex $n_5$ und Radius $r_5$,

mit $n_1 > n_2 > n_4$, mit $n_5 > n_4$ und mit $r_1 < r_2 < r_4 < r_5$,

wobei die Indizes und Radien so bestimmt sind, dass einerseits, in dem Bereich von Signalwellenlängen die optische Faser einen Monomode-Kern aufweist, der sich vom Zentrum der optischen Faser bis zum Radius $r_1$ erstreckt,

und andererseits, bei der Pumpwellenlänge, die optische Faser einen Multimode-Kern aufweist, der sich vom Zentrum der optischen Faser bis zum Radius $r_2$ erstreckt,

wobei der effektive Minimalindex $n_4$ der Randtranche (4) ausreichend gering ist, dass die numerische Apertur der optischen Faser bei der Pumpwellenlänge größer als 0,25 ist,

**dadurch gekennzeichnet, dass** $n_2 > n_5$ ist,

dass der externe Radius des Randtranches (2) welche sich transversal erstreckt zu der Achse der optischen Faser hauptsächlich eine kreisförmige Symmetrie aufweist,

und dass die Randtranche (2) mit Maximalindex $n_2$ eine abnehmende Gradientenform aufweist, so dass die Lichtenergie wenigstens eines Teils der bei der Pumpwellenlänge geführten Moden wieder zentriert wird, um die Überlappung zwischen den wieder zentrierten, geführten Moden und dem Teil (6) der optischen Faser, der mit der seltenen Erde dotiert ist, zu vergrößern.

2. Optische Faser nach Anspruch 1, **dadurch gekennzeichnet, dass** die Randtranche (2) mit Maximalindex $n_2$ eine Form in $\alpha$ aufweist mit $\alpha < 5$.

3. Optische Faser nach Anspruch 2, **dadurch gekennzeichnet, dass** die Randtranche (2) mit Maximalindex $n_2$ eine Form in $\alpha$ aufweist mit $\alpha > 2$.

4. Optische Faser nach Anspruch 3, **dadurch gekennzeichnet, dass** die Randtranche (2) mit Maximalindex $n_2$ eine Form in $\alpha$ aufweist mit $\alpha$ etwa 3.

5. Optische Faser nach einem der vorhergehenden Ansprüche, **dadurch gekennzeichnet, dass** die Randtranche (4) mit effektivem Minimalindex $n_4$ Lufthohlräume (41) einschließt, die untereinander durch Wände (42) getrennt sind und den Großteil der Randtranche (4) mit effektivem Minimalindex $n_4$ ausfüllen.

6. Optische Faser nach Anspruch 5, **dadurch gekennzeichnet, dass** die Wände (42) aus Bor enthaltendem Glas oder Fluor enthaltendem Glas sind.

7. Optische Faser nach Anspruch 5, **dadurch gekennzeichnet, dass** die Lufthohlräume (41) auf mehreren Reihen angeordnet sind, und dass die Wände (42) von einigen dieser Lufthohlräume (41), die zum Rand der optischen Faser hin liegen, aus Kunststoff sind.

8. Optische Faser nach einem der Ansprüche 5 bis 7, **dadurch gekennzeichnet, dass** die Wände (42) eine radial konstante Dicke e auf wenigstens einer gegebenen radialen Länge aufweisen.

9. Optische Faser nach einem der vorhergehenden Ansprüche, **dadurch gekennzeichnet, dass** der effektive Minimalindex $n_4$ ausreichend klein ist, damit die numerische Apertur der optischen Faser bei der Pumpwellenlänge größer als 0,3 ist.

10. Optische Faser nach Anspruch 9, **dadurch gekennzeichnet, dass** der effektive Minimalindex $n_4$ ausreichend klein ist, damit die numerische Apertur der optischen Faser bei der Pumpwellenlänge größer als 0,45 ist.

11. Optische Faser nach einem der vorhergehenden Ansprüche, **dadurch gekennzeichnet, dass** der effektive Minimalindex $n_4$ kleiner als 1,43 ist, bei einer Wellenlänge von 980 nm.

12. Optische Faser nach Anspruch 11, **dadurch gekennzeichnet, dass** der effektive Minimalindex $n_4$ kleiner als 1,40 ist, bei einer Wellenlänge von 980 nm.

13. Optische Faser nach Anspruch 12, **dadurch gekennzeichnet, dass** der effektive Minimalindex $n_4$ kleiner als 1,35 ist, bei einer Wellenlänge von 980 nm.

14. Optische Faser nach einem der vorhergehenden Ansprüche, **dadurch gekennzeichnet, dass** der Teil (6), der in der Randtranche (2) mit Maximalindex $n_2$, aber außerhalb der zentralen Tranche (1) mit Maximalindex $n_1$ liegt, mit der seltenen Erde dotiert ist.

15. Optische Faser nach Anspruch 14, **dadurch gekennzeichnet, dass** der mit der seltenen Erde dotierte Teil (6) sich wenigstens zwischen 3,5 $\mu$m und 5,5 $\mu$m, ausgehend vom Zentrum der optischen Faser erstreckt.

16. Optische Faser nach einem der vorhergehenden Ansprüche, **dadurch gekennzeichnet, dass** die zentrale Tranche (1) einen konstanten Index aufweist.

17. Optische Faser nach einem der vorhergehenden Ansprüche, **dadurch gekennzeichnet, dass** die optische Faser eine Randtranche (3) mit effektivem Ma-

ximalindex $n_3$ und Radius $r_3$, mit $n_2 > n_3 > n_4$ und mit $r_2 < r_3 < r_4$ aufweist.

18. Optische Faser nach Anspruch 17, **dadurch gekennzeichnet, dass** die Randtranche (3) mit effektivem Maximalindex $n_3$ einen konstanten Index aufweist, dass die Randtranche (5) mit Maximalindex $n_5$ einen konstanten Index aufweist, und dass $n_3 = n_5$.

19. Optische Faser nach Anspruch 17 oder 18, **dadurch gekennzeichnet, dass** die Randtranche (3) mit effektivem Maximalindex $n_3$ longitudinale Ungleichmäßigkeiten (31) bezüglich der Achse der optischen Faser aufweist, so dass die Kopplung zwischen Moden bei der Pumpwellenlänge verbessert wird.

20. Optische Faser nach Anspruch 19, **dadurch gekennzeichnet, dass** bei der Pumpwellenlänge die länglichen Ungleichmäßigkeiten (31) die Energie von Randmoden in geführte Moden einkoppeln.

21. Optische Faser nach Anspruch 19 oder 20, **dadurch gekennzeichnet, dass** bei der Pumpwellenlänge die länglichen Ungleichmäßigkeiten (31) die Energie von Randmoden in Randmoden einkoppeln, die aber reduzierte Verluste aufweisen.

22. Optische Faser nach einem der Ansprüche 19 bis 21, **dadurch gekennzeichnet, dass** die länglichen Ungleichmäßigkeiten (31) sich längs erstreckenden Lufthohlräume (31) sind.

23. Optische Faser nach Anspruch 22, **dadurch gekennzeichnet, dass** die Lufthohlräume (31) in einer ringförmigen Zone um das Zentrum der optischen Faser verteilt sind und dass die Lufthohlräume (31) einen kleinen Teil der ringförmigen Zone füllen.

24. Optische Faser nach einem der vorhergehenden Ansprüche, **dadurch gekennzeichnet, dass** die optische Faser eine optische Verstärkerfaser ist und dass der Bereich der Signalwellenlänge zwischen 1460nm und 1650nm beträgt.

25. Optische Faser nach Anspruch 24, **dadurch gekennzeichnet, dass** die seltene Erde Erbium enthält.

26. Optische Faser nach einem der vorhergehenden Ansprüche, **dadurch gekennzeichnet, dass** die optische Faser eine optische Laseremissionsfaser ist und dass der Bereich der Signalwellenlänge die 1060nm betragende Wellenlänge einschließt.

27. Optische Faser nach Anspruch 26, **dadurch gekennzeichnet, dass** die seltene Erde Ytterbium enthält.

28. Optische Faser nach einem der vorhergehenden Ansprüche, **dadurch gekennzeichnet, dass** die Pumpwellenlänge 980nm beträgt.

29. Optische Faser nach einem der vorhergehenden Ansprüche, **dadurch gekennzeichnet, dass** die Randtranche (5) mit Maximalindex $n_5$ einen konstanten Index aufweist.

30. Optische Faser nach einem der vorhergehenden Ansprüche, **dadurch gekennzeichnet, dass** der Radius $r_2$ größer als 25 $\mu$m ist.

31. Optische Faser nach einem der vorhergehenden Ansprüche, **dadurch gekennzeichnet, dass** das Indexprofil der optischen Faser ein horizontales Plateau (6) aufweist, das zwischen der zentralen Tranche (1) und der Randtranche (2) mit Maximalindex $n_2$ liegt.

32. Optische Faser nach einem der vorhergehenden Ansprüche, **dadurch gekennzeichnet, dass** der effektive Minimalindex $n_4$ ausreichend gering ist, dass mehr als 1000 Moden bei der Pumpwellenlänge in die optische Faser injiziert werden können.

33. Optische Faser nach einem der vorhergehenden Ansprüche, **dadurch gekennzeichnet, dass** das effektive Indexprofil der optischen Faser bei der Wellenlänge von 1550 nm, nacheinander von Zentrum der optischen Faser aus zu ihrem Rand hin

    zwischen dem Zentrum der optischen Faser bis zum Radius $r_1$ die zentrale Tranche (1) einen konstanten Index $n_1$ aufweist;

    zwischen dem Radius $r_1$ und dem Radius $r_6$, der Teil (6) einen konstanten Index $n_2$ mit $n_2 < n_1$ aufweist;

    zwischen dem Radius $r_6$ und dem Radius $r_2$ ein maximaler Index $n_2$ eine abnehmende Gradientenform bis $n_3$ mit $n_3 < n_2$ aufweist; zwischen dem Radius $r_2$ und dem Radius $r_3$ die Randtranche (3) mit effektivem Maximalindex $n_3$, die vom Zentrum der optischen Faser zu ihrem Rand hin zuerst einen konstanten Index $n_3$, dann einen kleinen Höcker mit einem Index kleiner als $n_2$ aufweist;

    zwischen dem Radius $r_3$ und dem Radius $r_4$ die Randtranche (4) einen konstanten Index $n_4$ mit $n_4 < n_3$ aufweist;

    zwischen dem Radius $r_4$ und einem Radius $r_5$ die äußere Hülle (5) einen konstanten Index $n_5$ mit $n_2 > n_5 > n_4$ aufweist.

34. Optische Faser nach einem der vorhergehenden Ansprüche, **dadurch gekennzeichnet, dass** $n_1 - n_5 > 10 . 10^{-3}$ ist.

## FIG_1A

## FIG_1B

## FIG_2A

## FIG_2B

## FIG_3A

## FIG_3B